# EUROPEAN PATENT APPLICATION

(11) **EP 4 765 325 A1**
(43) Date of publication of application: **24.06.2026**
(21) Application number: 25782843.4
(22) Date of filing: 26.03.2025
(51) Int. Cl.: H01M 10/52, H01M 10/44, H01M 4/04, H01M 50/342, H01M 10/04, H01M 10/48

(54) **SECONDARY BATTERY MANUFACTURING APPARATUS AND SECONDARY BATTERY MANUFACTURING METHOD USING SAME**

(30) Priority: 05.04.2024 KR 20240046823; 20.03.2025 KR 20250036151
(71) Applicant: LG Energy Solution, Ltd., Seoul 07335 (KR)
(72) Inventor: JUNG, Jea Bong, Daejeon 34122 (KR); CHA, Ji Hoon, Daejeon 34122 (KR); AHN, Chang Bum, Daejeon 34122 (KR); SEO, Jun Yeong, Daejeon 34122 (KR)
(74) Representative: Goddar, Heinz J.
(86) International application number: PCT/KR2025/003873
(87) International publication number: WO 2025/211641

(57) **Abstract**

The present invention relates to an apparatus for manufacturing a secondary battery and a method for manufacturing a secondary battery using the same, and more particularly, to an apparatus for manufacturing a secondary battery, which is capable of quickly and efficiently removing a gas generated inside a cell in an activation process of charging and discharging the cell, solving a problem of a space lack in an facility for manufacturing the secondary battery, and reducing cost of the manufacturing facility, and a method for manufacturing a secondary battery using the same.

## Description

### TECHNICAL FIELD

### CROSS-REFERENCE TO RELATED APPLICATION

The present application claims the benefit of the priority of Korean Patent Application Nos. 10-2024-0046823, filed on April 5, 2024, and 10-2025-0036151, filed on March 20, 2025, which are hereby incorporated by reference in their entirety.

### TECHNICAL FIELD

The present invention relates to an apparatus for manufacturing a secondary battery and a method for manufacturing a secondary battery using the same, and more particularly, to an apparatus for manufacturing a secondary battery, which is capable of quickly and efficiently removing a gas generated inside a cell in an activation process of charging and discharging the cell, solving a problem of a space lack in an facility for manufacturing the secondary battery, and reducing cost of the manufacturing facility, and a method for manufacturing a secondary battery using the same.

### BACKGROUND ART

In general, secondary batteries include nickelcadmium batteries, nickel-hydrogen batteries, lithium ion batteries, and lithium ion polymer batteries. Such a secondary battery is being applied to and used in small-sized products such as digital cameras, P-DVDs, MP3Ps, mobile phones, PDAs, portable game devices, power tools, E-bikes, and the like as well as large-sized products requiring high power such as electric vehicles and hybrid vehicles, power storage devices for storing surplus power or renewable energy, and backup power storage devices.

In general, in order to manufacture the lithium secondary battery, first, electrode active material slurry is applied to a positive electrode collector and a negative electrode collector to manufacture a positive electrode and a negative electrode. Then, the electrodes are stacked on both sides of a separator form an electrode assembly. In addition, a cup part of a pouch case (hereinafter, referred to as a pouch) may accommodate an electrode assembly and be sealed after injecting an electrolyte to manufacture an initial cell (secondary battery) B. In the secondary battery, an electrode lead connected to the electrode assembly may protrude in both directions.

In early secondary batteries, a pouch may include a gas pocket part extending to one side of a cup part in which the electrode assembly is accommodated. After the electrode assembly and an electrolyte are accommodated in the cup, an edge of the pouch may be sealed.

In this case, the sealing may be performed on an edge of the cup part and an outer edge of the gas pocket part. That is, an edge of an area on which the cup part and the gas pocket part are combined may be sealed in a closed curve to perform sealing so that the area on which the cup part and the gas pocket part are combined is sealed from the outside. When the initial secondary battery is manufactured in the shape that is sealed from the outside, a post-processing process may be performed to manufacture a final cell by post-processing the initial secondary battery. One of these post-processing processes may be an activation process to charge and discharge the initial secondary battery. In this activation process, an internal gas was generated inside the pouch when the cell is charged and discharged.

Conventional cell activators only perform the function of charging and discharging cells, and there was no device to process (or remove) an internal gas generated when charging and discharging the cells. If the internal gas generated during the activation process is not removed, the internal gas increases in pressure inside the pouch to cause tear or burst of the pouch. For example, if a width of a pouch sealing part is assumed to be 3 cm, a phenomenon in which sealing of about 1 cm out of 3 cm is torn (i.e., the seal is destroyed) due to the pressure of the internal gas may occur. This destruction of the pouch sealing means that an inner insulation layer (e.g., polypropylene layer (PP)) is destroyed to cause a problem of poor insulation. To solve this problem, there were problems due to spatial constraints and excessive increase in facility cost in manufacturing a separate internal gas venting device.

### DISCLOSURE OF THE INVENTION

### TECHNICAL PROBLEM

The present invention has been devised to solve the above problems, an object of the present invention is to provide an apparatus and method for manufacturing a secondary battery, which is capable of quickly and efficiently removing a gas generated inside a cell in an activation process of charging and discharging the cell, solving a problem of a space lack in an facility for manufacturing the secondary battery, and reducing cost of the manufacturing facility.

### TECHNICAL SOLUTION

An apparatus for manufacturing a secondary battery according to the present invention includes: a plurality of cell activation units which is configured to charge and discharge a cell and in which an activation process is performed; a cell transfer unit configured to pick up the cell and transfer the cell to at least one cell activation unit of the plurality of cell activation units; a guide rail unit provided so that the cell transfer unit is movable in a hung state and extending in a direction in which the plurality of cell activation units are arranged; and a venting unit provided to be movable along the guide rail unit and configured to perform a venting process of discharging an internal gas on the cell in the cell activation unit.

The apparatus may further include a cell standby unit configured to provide a cell standby position so that the cell is transferred to the cell activation unit by the cell transfer unit.

The venting unit may be movable to be at least one cell activation unit of the plurality of cell activation units along the guide rail unit.

The venting unit may include a rail hanging part hung on the guide rail unit, wherein a guide groove into which at least a portion of the guide rail unit is inserted may be defined in the rail hanging part.

The venting unit may include a venting module moving to the cell activation unit to perform piercing, venting, and sealing operations on the cell.

The venting module may include: a first venting module part disposed at one side of the cell; a second venting module disposed at the other side of the cell; and a guide part provided so that the first venting module part and the second venting module part are movable in the hung state, wherein at least one of the first venting module part or the second venting module part may move along the guide part, and the first venting module part and the second venting module part may become close to or away from each other.

The venting module may include a piercing part that defines a hole in the cell, a vacuum pad part configured to surround the piercing part, and a sealing tool part configured to surround the vacuum pad part and seal the cell with heat and a pressure in at least one of the first venting module part and the second venting module part.

The venting module may include a fixing part configured to support the first venting module part and fix the first venting module part so that the first venting module part does not move relative to the guide part.

The venting module may include a reference pin extending by a predetermined length in a direction from the second venting module part to the first module part and configured to allow the first venting module part and the second venting module part are spaced a set reference distance from each other.

The venting module may further include an elastic part configured to surround the reference pin and have elasticity in a direction from the second venting module part to the first venting module part.

The venting unit may include a horizontal adjustment module configured to move the venting module in a horizontal direction, wherein the horizontal adjustment module may include; a base part extending from one side to the other side in the horizontal direction; a linear rail part installed on the base part to extend from the one side to the other side and having a rail shape; an arm part moving in a direction of the one side or the other side along the linear rail part in a state in which the venting module is hung on a lower side of the arm part; and a linear driving part configured to provide driving force so that the arm part is movable.

The venting unit may include a vertical adjustment module configured to move the venting module in a vertical direction, wherein the vertical adjustment module may include: a support plate part configured to support the base part from a lower side; a main pillar part having a pillar shape and a lower side thereof fixedly installed on the support plate; and an elevation driving part configured to provide driving force so that the main pillar part moves vertically.

The vertical adjustment module may further include a guide pillar part installed to be spaced a predetermined distance from each other at each of both sides of the main pillar part and configured to prevent the support plate from being shaken while moving vertically.

The venting unit may include: a pressure sensor configured to measure a pressure inside the cell; an electro-pneumatic regulator configured to suction the internal gas from the inside of the cell through the venting module based on the result value sensed by the pressure sensor; and a buffer tank disposed in the middle of a path along which the internal gas moves from the venting module to the electro-pneumatic regulator and configured to separate and store an electrolyte mixed in the gas inside the cell by using gravity.

A method for manufacturing a secondary battery according to the present invention includes: a standby process in which a cell is disposed on a cell standby unit; a first transfer process in which a cell transfer unit picks up the cell from the cell standby unit to transfer the cell to the cell activation unit; an activation process of charging and discharging the cell to perform an activation process in the cell activation unit; a venting process in which a venting unit moves to the cell activation unit to discharge an internal gas with respect to the cell provided in the cell activation unit; and a return process in which the venting unit returns to its original position.

The method may further include a second transfer process in which the cell transfer unit transfers the cell provided in the cell activation unit to the cell standby unit.

In the first transfer process or the second transfer process, the cell transfer unit may be hung on a guide rail unit extending in a direction, in which a plurality of cell activation units are arranged, to move along the guide rail unit, and in the venting process or the return process, the venting unit may be hung on the guide rail unit to move along the guide rail unit.

In the first transfer process, the cell transfer unit may be configured to transfer the cell to a jig provided in the cell activation unit, and in the activation process, the jig may be configured to press the cell so that charging/discharging of the cell is performed.

The method may further include, before the second transfer process, a pressing release process of releasing the pressing of the cell, which is pressed by the jig.

### ADVANTAGEOUS EFFECTS

The apparatus and method for manufacturing the secondary battery according to the present invention may have the effects of quickly and efficiently removing a gas generated inside a cell in an activation process of charging and discharging the cell, solving a problem of a space lack in an facility for manufacturing the secondary battery, and reducing cost of the manufacturing facility.

### BRIEF DESCRIPTION OF THE DRAWINGS

FIG. 1 is a perspective view illustrating an apparatus for manufacturing a secondary battery according to Embodiment 1 of the present invention.
FIG. 2 is a front view illustrating a state in which a cell inside a cell activation unit is mounted on a jig in the apparatus for manufacturing the secondary battery according to Embodiment 1 of the present invention.
FIG. 3 is a perspective view illustrating a venting unit in the apparatus for manufacturing the secondary battery according to Embodiment 1 of the present invention.
FIG. 4 is a perspective view of the venting unit when viewed at a different angle.
FIG. 5 is a front view of the venting unit when viewed in a direction of an arrow X in FIG. 4.
FIG. 6 is a side view of the venting unit when viewed in a direction of an arrow Y in FIG. 4.
FIG. 7 is an enlarged side view illustrating a portion of the venting module, which is disposed at a portion of a box A in FIG. 6.
FIG. 8 is a perspective view illustrating only one of first venting module parts illustrated in FIG. 7.
FIG. 9 is an enlarged perspective view of a horizontal adjustment module disposed at a portion of a box B in FIG. 5.
FIG. 10 is an enlarged perspective view of a vertical adjustment module disposed at a portion of a box C in FIG. 5.
FIG. 11 is an enlarged perspective view of a pressure sensor and an electro-pneumatic regulator disposed at a portion of a box D in FIG. 4.
FIG. 12 is an enlarged perspective view of a buffer tank disposed at a portion of a box E in FIG. 4.
FIG. 13 is a diagram illustrating a method for manufacturing a secondary battery according to Embodiment 2 of the present invention.

### MODE FOR CARRYING OUT THE INVENTION

Hereinafter, aspects of the present invention will be described in detail with reference to the accompanying drawings so that those of ordinary skill in the art can easily carry out the present invention. However, the present invention may be implemented in several different forms and is not limited or restricted by the following examples.

In order to clearly explain the present invention, detailed descriptions of portions that are irrelevant to the description or related known technologies that may unnecessarily obscure the gist of the present invention have been omitted, and in the present specification, reference symbols are added to components in each drawing. In this case, the same or similar reference numerals are assigned to the same or similar elements throughout the specification.

Also, terms or words used in this specification and claims should not be restrictively interpreted as ordinary meanings or dictionary-based meanings, but should be interpreted as meanings and concepts conforming to the scope of the present invention on the basis of the principle that an inventor may properly define the concept of a term to describe and explain his or her invention in the best ways.

### Embodiment 1

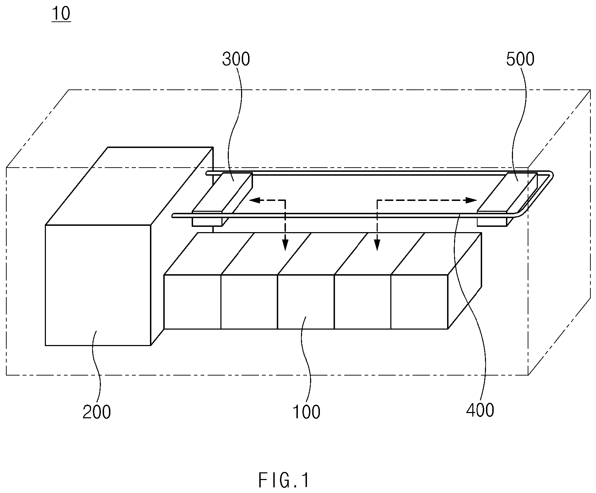

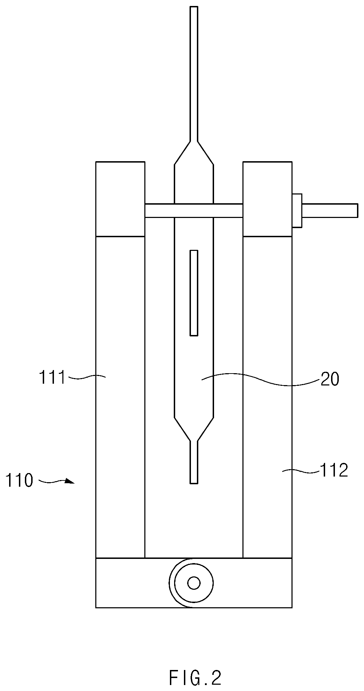

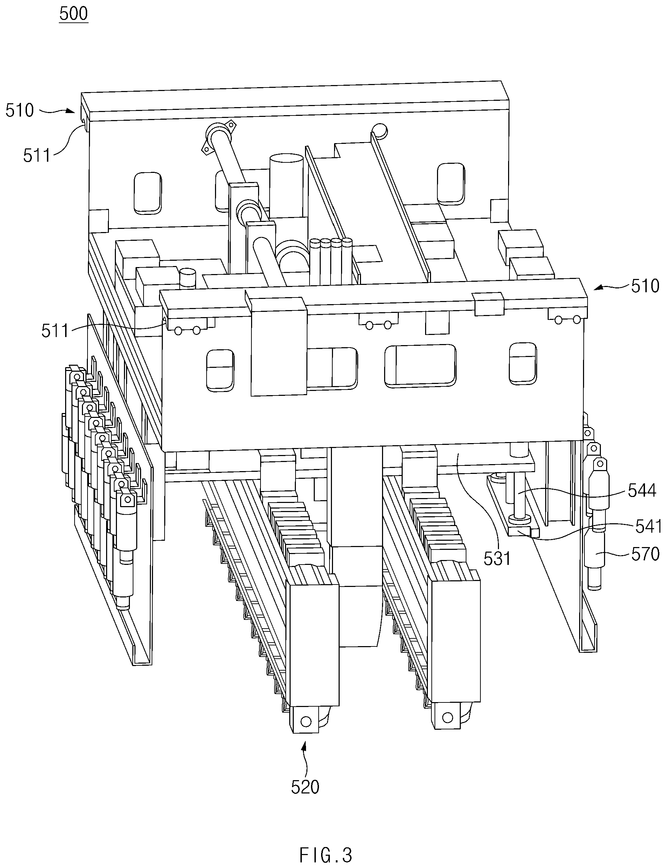

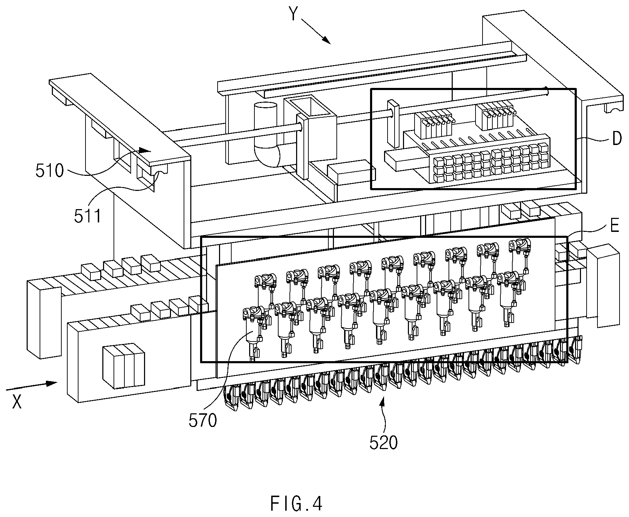

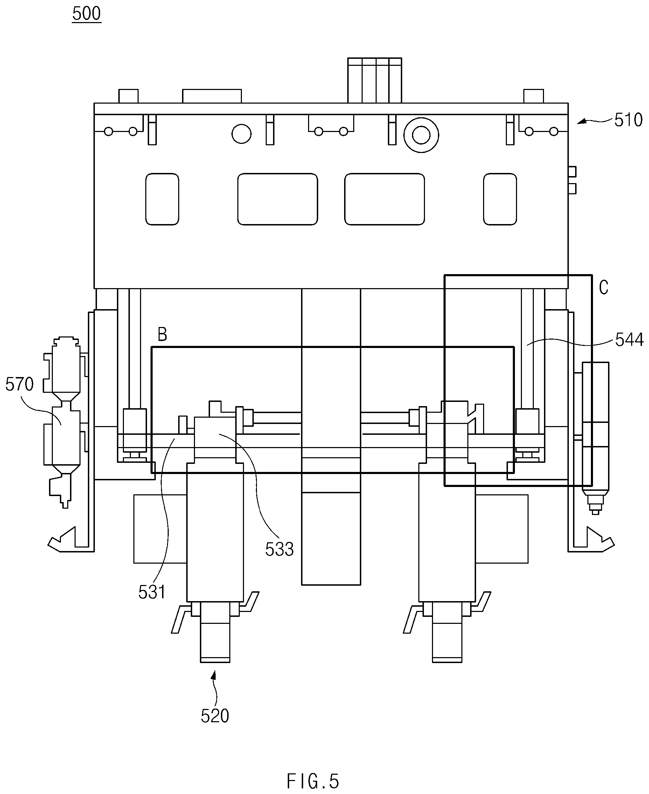

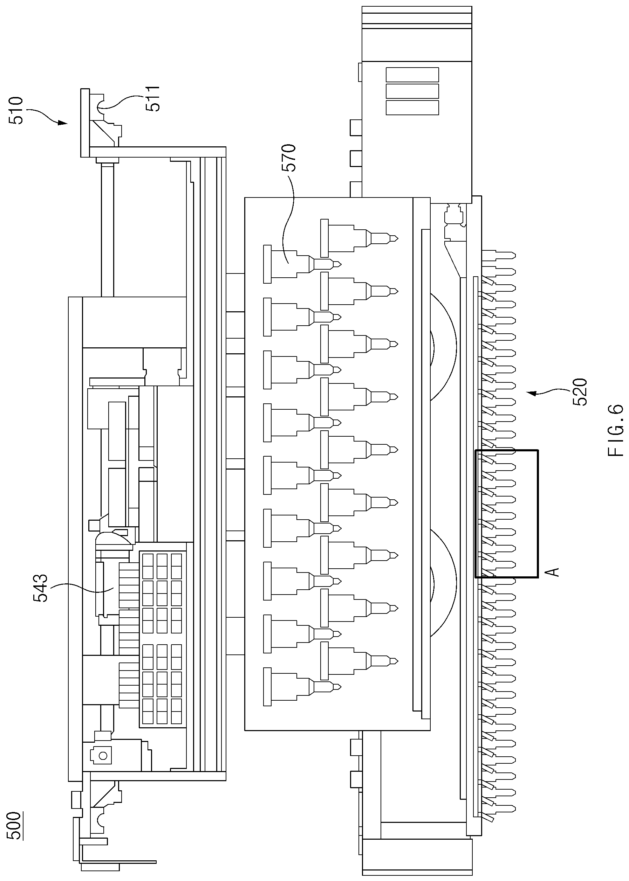

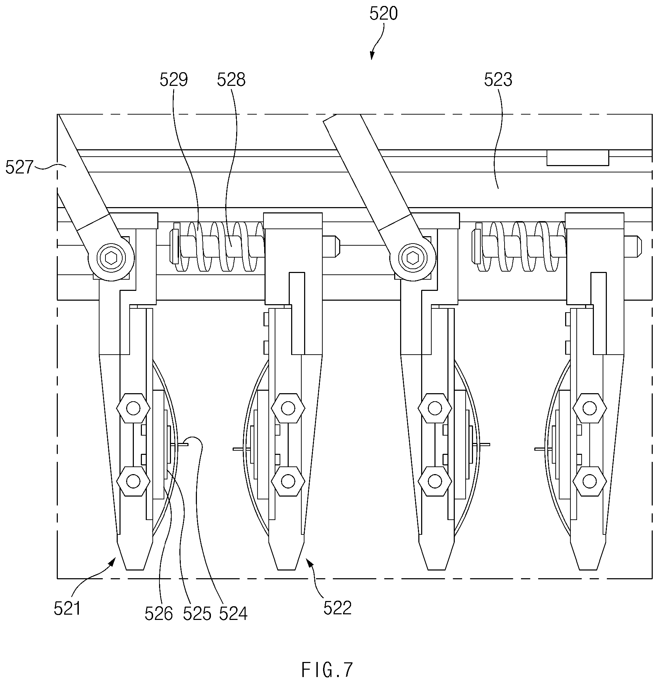

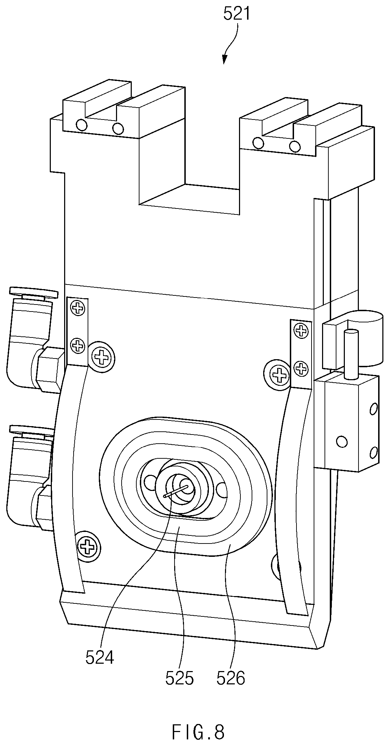

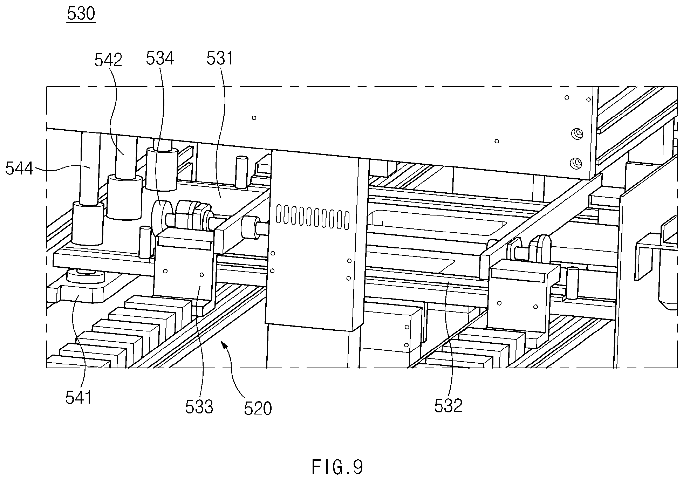

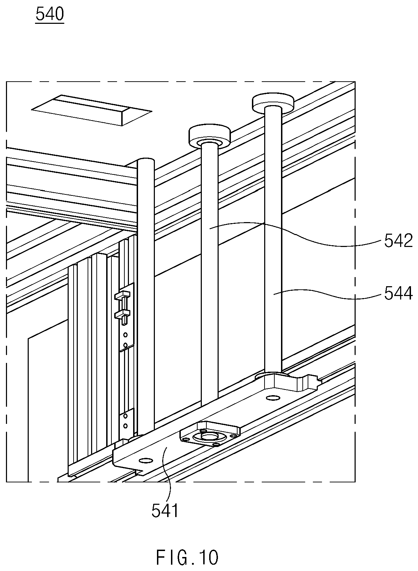

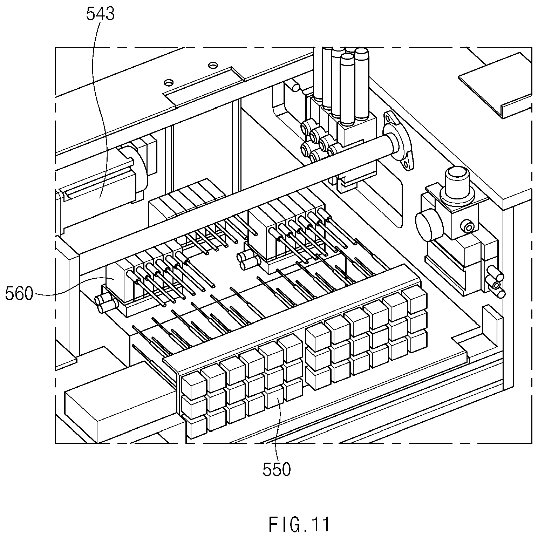

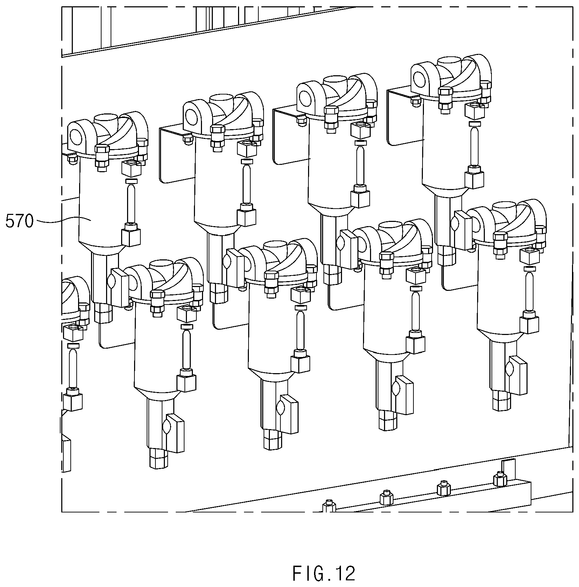

FIG. 1 is a perspective view illustrating an apparatus for manufacturing a secondary battery according to Embodiment 1 of the present invention. FIG. 2 is a front view illustrating a state in which a cell inside a cell activation unit is mounted on a jig in the apparatus for manufacturing the secondary battery according to Embodiment 1 of the present invention. FIG. 3 is a perspective view illustrating a venting unit in the apparatus for manufacturing the secondary battery according to Embodiment 1 of the present invention. FIG. 4 is a perspective view of the venting unit when viewed at a different angle. FIG. 5 is a front view of the venting unit when viewed in a direction of an arrow X in FIG. 4. FIG. 6 is a side view of the venting unit when viewed in a direction of an arrow Y in FIG. 4. FIG. 7 is an enlarged side view illustrating a portion of the venting module, which is disposed at a portion of a box A in FIG. 6. FIG. 8 is a perspective view illustrating only one of first venting module parts illustrated in FIG. 7. FIG. 9 is an enlarged perspective view of a horizontal adjustment module disposed at a portion of a box B in FIG. 5. FIG. 10 is an enlarged perspective view of a vertical adjustment module disposed at a portion of a box C in FIG. 5. FIG. 11 is an enlarged perspective view of a pressure sensor and an electro-pneumatic regulator disposed at a portion of a box D in FIG. 4. FIG. 12 is an enlarged perspective view of a buffer tank disposed at a portion of a box E in FIG. 4.

First, referring to FIG. 1, an apparatus 100 for manufacturing a secondary battery according to Embodiment 1 of the present invention includes a cell activation unit 100, a cell standby unit 200, a cell transfer unit 300, a guide rail unit 400, and a venting unit 500.

The cell activation unit 100 may be a device that charges and discharges a cell 20 to perform an activation process. Here, the cell 20 may be a secondary battery provided with an electrode lead. In addition, the cell activation unit 100 is provided in plurality so that an activation process is performed on a large number of cells 20 at once. In addition, the plurality of cells may be included in one cell activation unit 100. A jig 110 as illustrated in FIG. 2 may be installed within the cell activation unit 100. The jig 110 may include a left jig 111 and a right jig 112. The left jig 111 and the right jig 112 may move toward or away from the cell 20. While the cell 20 is being charged and discharged, the left jig 111 and the right jig 112 may press the cell 20 from both sides.

The cell standby unit 200 may be a device in which the cell 20 stands by to be supplied to the cell activation unit 100. In the cell standby unit 200, the cell 20 may be placed on a tray. For example, a plurality of cells 20 may be contained on a single tray. The cell standby unit 200 may supply a large number of cells 20 placed on the tray at once by supplying the tray on which the cells are placed. As illustrated in FIG. 1, the plurality of cell activation units 100 may be arranged in one direction from the cell standby unit 200.

The cell transfer unit 300 may be a unit that picks up the cell 20 from the cell standby unit 200 to transfer the cell 20 to at least one cell activation unit 100 of the plurality of cell activation units 100. For example, the cell transfer unit 300 may be a pick and place (P&P) device.

The guide rail unit 400 may be provided so that the cell transfer unit 300 is hung to move. In addition, the guide rail unit 400 may extend in a direction in which the plurality of cell activation units 100 are arranged (including a direction parallel thereto). As illustrated in FIG. 1, the guide rail unit 400 may have a form in which a pair of rails that are parallel to each other extend in one direction. The cell transport unit 300 may move along the pair of rails. A direction in which the pair of rails extend may be the direction in which the plurality of cell activation units 100 are arranged. The cell transfer unit 300 may include a hanging portion that is hung on the pair of rails.

The cell transfer unit 300 may pick up the cell 20 to supply the cell 20 to the jig 110 within the cell activation unit 100. As illustrated in FIG. 2, when the cell 20 is seated on the jig 110, a cell activation process may be proceed. During the cell activation process, the left jig 111 and the right jig 112 may move toward the cell 20 to press the cell 20 from both the sides.

The venting unit 500 may be provided to be movable along the guide rail unit 400. The venting unit 500 may move along the guide rail unit 400 to at least one of the plurality of cell activation units 100. In addition, the venting unit 500 may perform a venting process for discharging an internal gas for the cell 20 in the cell activation unit 100.

The venting unit 500 may stand by at a standby position of the venting unit 500 while the cell transfer unit 300 moves along the guide rail unit 400. Thus, the venting unit 500 may be prevented from interfering when the cell transfer unit moves along the guide rail unit 400. Then, when a venting operation for discharging the internal gas is required for the cell 20 within the cell activation unit 100, the venting operation may be performed on the corresponding cell 20 by moving to the cell activation unit 100. Here, the cell transfer unit 300 may stand by in its standby position so as not to interfere with the movement of the venting unit 500. In this manner, the cell transfer unit 300 and the venting unit 500 may operate smoothly without colliding with each other while sharing one guide rail unit 400.

As previously described in the background technology, the conventional cell activators only perform the function of charging and discharging the cells, and there was no device to process (or remove) the internal gas generated when charging and discharging the cells. Thus, the apparatus 100 for manufacturing the secondary battery according to Embodiment 1 of the present invention may be configured as described above, and thus, the internal gas generated inside the cell 20 during the activation process of charging and discharging the cell 20 may be quickly and efficiently removed. If the internal gas is removed in this manner, the problem in which the pouch of the secondary battery pouch is burst (or torn) during the activation process may not occur, and thus, the problem of poor insulation of the pouch may not occur.

In addition, the apparatus 100 for manufacturing the secondary battery according to Embodiment 1 of the present invention may implement a device for removing the internal gas by utilizing the guide rail unit 400 that is already present in the device for performing the cell activation, rather than manufacturing a separate and independent internal gas venting device for discharging a gas inside the cell 20. Thus, the problem of the insufficient space in the facility for manufacturing the secondary battery may be solved, and the costs of the manufacturing facility may also be reduced.

Hereinafter, the venting unit 500, which is a unit, which discharges the internal gas of the cell 20 in the apparatus 100 for manufacturing the secondary battery according to Embodiment 1 of the present invention, is described in more detail.

Referring to FIGS. 3 and 6, the venting unit 500 may include a rail hanging part 510 that is hung on the guide rail unit 400. A guide groove 511 may be defined in the rail hanging part 510 into which at least a portion of the guide rail unit 400 is inserted. Two guide grooves 511 may be provided so that a 'pair' of rails, which are parallel to each other, of the guide rail unit 400 are inserted. Specifically, the guide grooves 511 may be provided at left and right sides of the venting unit 500 based on FIG. 6. Each of the guide grooves 511 may have a semicircular cross-section.

Referring to FIGS. 6 to 8, the venting unit 500 may include a venting module 520 that moves to the cell activation unit 100 to perform piercing, venting, and sealing operations on the cell 20.

Specifically, the venting module 520 may include a first venting module part 521, a second venting module part 522, and a guide part 523. The first venting module 521 may be disposed at one side of the cell 20, and the second venting module 522 may be disposed at the other side of the cell 20 to perform the piercing, venting, and sealing operations.

The guide part 523 may be provided so that the first venting module part 521 and the second venting module part 522 are hung to move. For example, the guide part 523 may be provided in the form of a metal beam extending with an I-shaped cross-section. In addition, referring to FIG. 8, a hanging portion having a groove hung on the guide part 523 may be provided at an upper portion of the first venting module part 521. Thus, the first venting module part 521 may be hung on the guide part 523.

The second venting module part 522 may also have the same shape as the first venting module part 521. Thus, the second venting module part 522 may also be hung on the guide part 523. The second venting module 522 may be slid in a direction closer to and further away from the cell 20 while being hung on the guide part 523. In this manner, at least one of the first venting module part 521 or the second venting module part 522 may move along the guide part 523, and a distance between the first venting module part 521 and the second venting module part 522 may become closer to or far from each other. Alternatively, when a fixing part 527 described below is installed, only the second venting module part 522 may move.

Referring to FIGS. 7 and 8, the venting module 520 may include a piercing part 524, a vacuum pad part 525, and a sealing tool part 526. The venting module 520 may include the piercing part 524, the vacuum pad part 525, and the sealing tool part 526 in at least one of the first venting module part 521 or the second venting module part 522. In Embodiment 1 of the present invention, each of both the first venting module part 521 and the second venting module part 522 may be provided with the piercing part 524, the vacuum pad part 525, and the sealing tool part 526.

The piercing part 524 may be configured to form a hole in the cell 20. The piercing part 524 may have a thin needle shape. Alternatively, the piercing part 524 may be a configuration that includes a sharp blade. The vacuum pad part 525 may be configured to surround the piercing part 524 and seal a surface of the pouch so that vacuum is generated. That is, the vacuum pad part 525 may be a configuration that surrounds and seals the hole defined by the piercing part 524 to prevent air from being introduced into the hole. The vacuum pad may have an oval shape. The sealing tool part 526 may have a shape that surrounds the vacuum pad part 525. The sealing tool part 526 may be configured to seal the cell 20 through heat and a pressure. The sealing tool part 526 may also have an oval shape.

Each of both the first venting module part 521 and the second venting module part 522 may be provided with the piercing part 524. In this case, the piercing parts 524 respectively provided in the first and second venting module parts 521 and 522 may be spaced a predetermined distance from each other in a vertical direction so as not to overlap each other. That is, when the first venting module part 521 and the second venting module part 522 become closer to each other toward the cell 20, the piercing part 524 provided in the first venting module part 521 and the piercing part 524 provided in the second venting module 520 may be alternately disposed vertically so that the piercing part 524 provided in the first venting module part 521 and the piercing part 524 provided in the second venting module 520 do not meet each other. In this case, the pouch of the secondary battery may have two holes to discharge the internal gas.

Referring to FIG. 7, the venting module 520 may include the fixing member 527 that supports the first venting module part 521 and fixes the first venting module part 521 so that the first venting module part 521 does not move relative to the guide part 523. That is, if the fixing member 527 fixes the first venting module 520 so that the first venting module 520 does not move, the second venting module 520 may approach the first venting module 520 to perform the venting operation.

In addition, the venting module 520 may include a reference pin 528. The reference pin 528 may have a shape that extends by a predetermined length in the direction from the second venting module part 522 to the first module part. Thus, the reference pin 528 may serve as a reference to allow the first venting module part 521 and the second venting module part 522 to be spaced a set reference distance from each other. Specifically, the reference pin 528 may be fixed to a right side of the second venting module part 522 based on FIG. 7, and when the second venting module part 522 approaches the first venting module part 521, and the reference pin 528 touches the first venting module part 521, the second venting module part 522 may be stopped without moving forward further. Thus, the first venting module part 521 and the second venting module part 522 may be disposed to be spaced a predetermined reference distance from each other.

In addition, the venting module 520 may further include an elastic part 529 having a shape surrounding the reference pin 528. For example, the elastic part 529 may have a shape of a spring. In addition, the elastic part 529 may be configured to have elasticity in a direction from the second venting module part 522 to the first venting module part 521. Thus, the elastic part 529 may assist the second venting module part 522 to move away from the first venting module part 521 and then easily move to an initial standby position. That is, elasticity may be provided so that the second venting module part 522 is easier for the second venting module part 522 to move to its original position.

Referring to FIGS. 5 and 9, the venting unit 500 may include a horizontal adjustment module 530 that moves the venting module 520 in a horizontal direction. The horizontal adjustment module 530 may include a base part 531, a linear rail part 532, an arm part 533, and a linear driving part 534.

The base part 531 may be configured to extend from one side to the other with respect to the horizontal direction. In addition, the base part 531 may have a flat plate shape. The linear rail part 532 may be installed on the base part 531. In addition, the linear rail part 532 may be configured to extend from one side to the other and have a rail shape. The linear rail part 532 may be fixedly installed on the base part 531.

The arm part 533 may be configured to move in a direction of one side or the other side along the linear rail part 532 while being provided with the venting module at a lower side thereof. The venting module 520 may be attached to the lower side of the arm part 533. In addition, an upper portion of the arm part 533 may be hung on the linear rail part 532. The linear rail part 532 may have a type of rail shape. For example, the linear rail part 532 may be a linear motion (LM) guide rail.

The arm part 533 may move in a straight line along the linear rail part 532. As the arm part 533 moves in the straight line from one side to the other, the venting module 520 hung on the arm part 533 may also move in the straight line from one side to the other. In this manner, the horizontal adjustment module 530 may move the venting module 520 in the horizontal direction.

In addition, the horizontal adjustment module 530 may include the linear driving part 534. The linear driving part 534 may be configured to provide driving force so that the arm 533 moves. The linear drive unit 534 may be a device using a cylinder or a servo motor. The linear driving part 534 may apply force to the arm 533 to allow the arm 533 to move in the straight line along the linear rail part 532.

Referring to FIGS. 5 and 10, the venting unit 500 may further include a vertical adjustment module 540 that moves the venting module 520 in a vertical direction. The vertical adjustment module 540 may include a support plate part 541, a main pillar part 542, and an elevation driving part 543.

The support plate part 541 may be configured to support the base part 531 from a lower side of the base part 531 and to allow the base part 531 to ascend or descend. The support plate part 541 may be configured to extend by a predetermined width in one direction.

The main pillar part 542 may have a pillar shape and may be configured so that a lower side thereof is fixedly installed on the support plate. Thus, when the main pillar part 542 moves upward, the support plate part 541 may also move upward, and when the main pillar part 542 moves downward, the support plate part 541 may also move downward.

The elevation driving part 543 may be configured to provide driving force to move the main pillar part 542 vertically. The elevation driving part 543 may include a cylinder or a servo motor.

In addition, the vertical adjustment module 540 may further include a guide pillar part 544 that assists the main pillar part 542. The guide pillar part 544 may be installed at a predetermined distance at each of both sides of the main pillar part 542. In addition, the guide pillar part 544 may serve to prevent the support plate from being shaken while moving vertically. That is, rather than moving the support plate part 541 vertically by installing only one main pillar part 542, the support plate part 541 may move vertically more stably due to the presence of the guide pillar part 544. Here, the configuration in which the elevation driving part 543 provides power may be one main pillar part 542. Although the main pillar part 542 moves vertically by receiving the power, since a lower end of the guide pillar part 544 is fixedly installed to the support plate part 541, the guide pillar part 544 may also move vertically together with the support plate part 541. That is, when the main pillar part 542 moves vertically, the support plate part 541 may move vertically, and the guide pillar part 544 may also move vertically.

The support plate part 541 may be installed on a lower side of the base part, and the base part 531 and the support plate part 541 may be installed to move together. Thus, when the support plate part 541 moves vertically, the base part 531 may move vertically together with the support plate part 541. In addition, the linear rail part 532 installed on the base part 531 and the venting module 520 hung on the linear rail part 532 may move vertically according to the vertical movement of the base part 531. In this manner, the vertical adjustment module 540 and the venting module 520 may move vertically.

As described above, in the apparatus 100 for manufacturing the secondary battery according to Embodiment 1 of the present invention, the venting unit 500 may include the horizontal adjustment module 530 and the vertical adjustment module 540 to allow the venting module 520 to move to an accurate position at which the cell 20 is disposed. Since the position of the venting module 520 is adjusted by the horizontal adjustment module 530 and the upper and lower adjustment module 540 together, the venting module 520 may move a three-dimensionally accurate position.

Referring to FIG. 4 and FIG. 11, the venting unit 500 may include a pressure sensor 550, a electro-pneumatic regulator 560, and a buffer tank 570.

The pressure sensor 550 may be a sensor configuration that measures a pressure inside the cell 20. When a pressure value higher than a certain value is measured inside the cell 20, the venting module 520 may operate to transmit a signal so that air inside the cell 20 is suctioned.

The electro-pneumatic regulator 560 may be configured to suction the internal gas from the inside of the cell 20 through the venting module 520 based on the result value sensed by the pressure sensor 550. The electro-pneumatic regulator 560 may be configured to generate vacuum using electrical force. A vacuum pressure may be generated inside the vacuum pad part 525 to suction the air inside the cell 20.

In addition, the buffer tank 570 may be disposed in the middle of a path along which the internal gas moves from the venting module 520 to the electro-pneumatic regulator 560. The buffer tank 570 may be configured to separate and store an electrolyte mixed in the gas inside the cell 20 using gravity. The buffer tank 570 may include a cylindrical storage container and may be provided in plurality as many as the number of venting modules 520.

### Embodiment 2

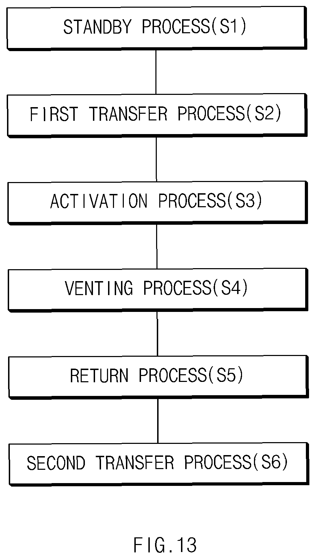

FIG. 13 is a diagram illustrating a method for manufacturing a secondary battery according to Embodiment 2 of the present invention.

In Embodiment 2 of the present invention, a method for manufacturing a secondary battery using the apparatus 100 for manufacturing the secondary battery according to Embodiment 1 is described, and is different from Embodiment 1 in this respect.

The contents that are duplicated with Embodiment 1 will be omitted as much as possible, and Embodiment 2 will be described with a focus on the differences. That is, it is obvious that the contents that are not described in Embodiment 2 may be regarded as the contents of Embodiment 1 if necessary.

Referring to FIGS. 1 and 13, a method for manufacturing a secondary battery according to Embodiment 2 of the present invention includes a standby process (S1), a first transfer process (S2), an activation process (S3), a venting process (S4), a return process (S5), and a second transfer process (S6).

The standby process (S1) may be a process in which the cell 20 is disposed in the cell standby unit 200 so as to be supplied to the cell activation unit 100. In the cell standby unit 200, the cell 20 may be placed on a tray. For example, the plurality of cells 20 may be contained on a single tray. The cell standby unit 200 may supply a large number of cells 20 placed on the tray at once by supplying the tray.

The first transfer process (S2) may be a process in which the cell transfer unit 300 picks up the cell 20 from the cell standby unit 200 and transfers the cell 20 to at least one cell activation unit 100 of the plurality of cell activation units 100. The cell transfer unit 300 may be a pick and place (P&P) device, and the cell transfer unit 300 may move along a rail-shaped guide rail unit 400. The cell transfer unit 300 may be hung on the guide rail unit 400 to move along the guide rail unit 400. The venting unit 500 may stand by at a standby position of the venting unit 500 while the cell transfer unit 300 moves along the guide rail unit 400. Thus, the venting unit 500 may be prevented from interfering when the cell transfer unit moves along the guide rail unit 400.

In the first transfer process (S2), the cell transfer unit 300 may transfer the cell 20 to the jig 110 within the cell activation unit 100. When the cell 20 is placed on the jig 110, the cell activation process may be performed. The activation process (S3) may be a process in which the cell 20 is charged and discharged in the cell activation section, and the activation process is performed. During the cell activation process, the left jig 111 and the right jig 112 may move toward the cell 20 to press the cell 20 from both the sides. That is, the jig 110 may press the cell 20 to perform the charging/discharging of the cell 20. This may be to ensure that the activation process is performed efficiently and smoothly.

The venting process (S4) may be a process in which the venting unit 500 moves to the cell activation unit 100 to discharge the internal gas from the cell 20 in the cell activation unit 100 when the discharge of the internal gas within the cell 20 generated in the activation process is required. The venting unit 500 may move using the guide rail unit 400 that is previously used by the cell transfer unit 300. The venting unit 500 may be hung on the guide rail unit 400 to move along the guide rail unit 400.

Specifically, the pressure sensor 550 may measure an internal pressure of the cell 20, and if the measured pressure is higher than a reference value, and it is determined that the discharge of the internal gas is necessary for the cell 20 within the cell activation unit 100, that is, if it is determined that a venting operation is necessary for the cell 20 within the cell activation unit 100, the venting unit 500 may move to the corresponding cell activation unit 100 to perform the venting operation for the corresponding cell 20. The venting operation may be an operation of suctioning air using the electro-pneumatic regulator 560.

When the venting unit 500 moves along the guide rail unit 400 for the venting operation, the cell transfer unit 300 may stand by at the standby position of the cell transfer unit 300 so as not to interfere with the movement of the venting unit 500. In this manner, the cell transfer unit 300 and the venting unit 500 may operate smoothly without colliding with each other while sharing one guide rail unit 400.

The return process (S5) may be a process in which the venting unit 500, which has completed the venting operation for the cell 20 in the cell activation unit 100, returns to its original position. Likewise, here, the venting unit 500 may move along the guide rail unit 400. The venting unit 500 may be hung on the guide rail unit 400 to move along the guide rail unit 400. Here, the cell transfer unit 300 may still be in a standby position.

After the activation process (S3) is completely completed, there may be a process of releasing the pressing of the cell 20 pressed by the jig 110. That is, the left jig 111 and the right jig 112 may move away from the cell 20 to release the pressing of the cell 20. This process may be a pressing release process. Alternatively, if the activation process is performed without performing the pressing using the jig 110 in the activation process (S3), this pressing release process may not be necessary. After the pressing on the cell 20 is released, the cell transfer unit 300 may transfer the cell 20 through a second transfer process (S6) to be discussed below.

The second transfer process (S6) may be a process in which the cell 20 in the pressed state in the cell activation unit 100 is transferred again to the cell standby unit 200 by the cell transfer unit 300. In this case, the cell transfer unit 300 may move along the guide rail unit 400 while hanging the cell 20. The cell transfer unit 300 may be hung on the guide rail unit 400 to move along the guide rail unit 400. When the cell transfer unit 300 moves along the guide rail unit 400, the venting unit 500 may stand by at the standby position so as not to cause any interference.

The portions related to the guide rail unit may be organized as follows.

In the first transfer process or the second transfer process, the cell transfer unit 300 may be hung on the guide rail unit 400 to move along the guide rail unit. In the venting process or the return process, the venting unit 500 may be hung on the guide rail to move along the guide rail.

In the first transfer process or the second transfer process, while the cell transfer unit 300 moves along the guide rail unit 400, the venting unit 500 may stand by at the standby position. Thus, the cell transfer unit 300 may be prevented from interfering when moving along the guide rail unit 400.

In the venting process or the return process, while the venting unit 500 moves along the guide rail unit 400, the cell transfer unit 300 may stand by in its own standby position so as not to interfere with the movement of the venting unit 500.

In this manner, the cell transfer unit 300 and the venting unit 500 may operate smoothly without colliding with each other while sharing one guide rail unit 400.

Through the method described above, in the method for manufacturing the secondary battery according to Embodiment 2 of the present invention, the gas generated within the cell during the activation process of charging and discharging the cell may be quickly and efficiently removed. In addition, in the method for manufacturing the secondary battery according to Embodiment 2 of the present invention, the problem of the space lack in the facility of manufacturing the secondary battery may be solved, and the cost of the manufacturing facility may be reduced.

While the embodiments of the present invention have been described with reference to the specific embodiments, it will be apparent to those skilled in the art that various changes and modifications may be made without departing from the spirit and scope of the invention as defined in the following claims.

### [Description of the Symbols]

10: Apparatus for manufacturing secondary battery
20: Cell
100: Cell activation unit
110: Jig
111: Left jig
112: Right jig
200: Cell standby unit
300: Cell transfer unit
400: Guide rail unit
500: Venting unit
510: Rail hanging part
511: Guide groove
520: Venting module
521: First venting module part
522: Second venting module part
523: Guide part
524: Piercing part
525: Vacuum pad part
526: Sealing tool part
527: Fixing part
528: Reference pin
529: Elastic part
530: Horizontal adjustment module
531: Base part
532: Linear rail part
533: Arm part
534: Linear driving part
540: Vertical adjustment module
541: Support plate part
542: Main pillar part
543: Elevation driving part
544: Guide pillar part
550: Pressure sensor
560: Electro-pneumatic regulator
570: Buffer tank
S1: Standby process
S2: First transfer process
S3: Activation process
S4: Venting process
S5: Return process
S6: Second transfer process

## Claims

1. An apparatus for manufacturing a secondary battery, the apparatus comprising:
a plurality of cell activation units which is configured to charge and discharge a cell and in which an activation process is performed;
a cell transfer unit configured to pick up the cell and transfer the cell to at least one cell activation unit of the plurality of cell activation units;
a guide rail unit provided so that the cell transfer unit is movable in a hung state and extending in a direction in which the plurality of cell activation units are arranged; and
a venting unit provided to be movable along the guide rail unit and configured to perform a venting process of discharging an internal gas on the cell in the cell activation unit.

2. The apparatus for manufacturing a secondary battery of claim 1, further comprising a cell standby unit configured to provide a cell standby position so that the cell is transferred to the cell activation unit by the cell transfer unit.

3. The apparatus for manufacturing a secondary battery of claim 1, wherein the venting unit is movable to at least one cell activation unit of the plurality of cell activation units along the guide rail unit.

4. The apparatus for manufacturing a secondary battery of claim 3, wherein the venting unit comprises a rail hanging part hung on the guide rail unit,
wherein a guide groove into which at least a portion of the guide rail unit is inserted is defined in the rail hanging part.

5. The apparatus for manufacturing a secondary battery of claim 3, wherein the venting unit comprises a venting module moving to the cell activation unit to perform piercing, venting, and sealing operations on the cell.

6. The apparatus for manufacturing a secondary battery of claim 5, wherein the venting module comprises:
a first venting module part disposed at one side of the cell;
a second venting module part disposed at the other side of the cell; and
a guide part provided so that the first venting module part and the second venting module part are movable in the hung state,
wherein at least one of the first venting module part or the second venting module part moves along the guide part, and
the first venting module part and the second venting module part become close to or away from each other.

7. The apparatus for manufacturing a secondary battery of claim 6, wherein the venting module comprises a piercing part that forms a hole in the cell, a vacuum pad part configured to surround the piercing part, and a sealing tool part configured to surround the vacuum pad part and seal the cell with heat and a pressure, in at least one of the first venting module part and the second venting module part.

8. The apparatus for manufacturing a secondary battery of claim 6, wherein the venting module comprises a fixing part configured to support the first venting module part and fix the first venting module part so that the first venting module part does not move relative to the guide part.

9. The apparatus for manufacturing a secondary battery of claim 6, wherein the venting module comprises a reference pin extending by a predetermined length in a direction from the second venting module part to the first module part and configured to allow the first venting module part and the second venting module part are spaced a set reference distance from each other.

10. The apparatus for manufacturing a secondary battery of claim 9, wherein the venting module further comprises an elastic part configured to surround the reference pin and have elasticity in a direction from the second venting module part to the first venting module part.

11. The apparatus for manufacturing a secondary battery of claim 5, wherein the venting unit comprises a horizontal adjustment module configured to move the venting module in a horizontal direction,
wherein the horizontal adjustment module comprises;
a base part extending from one side to the other side in the horizontal direction;
a linear rail part installed on the base part to extend from the one side to the other side and having a rail shape;
an arm part moving in a direction of the one side or the other side along the linear rail part in a state in which the venting module is hung on a lower side of the arm part; and
a linear driving part configured to provide driving force so that the arm part is movable.

12. The apparatus for manufacturing a secondary battery of claim 11, wherein the venting unit comprises a vertical adjustment module configured to move the venting module in a vertical direction,
wherein the vertical adjustment module comprises:
a support plate part configured to support the base part from a lower side;
a main pillar part having a pillar shape and a lower side thereof fixedly installed on the support plate ; and
an elevation driving part configured to provide driving force so that the main pillar part moves vertically.

13. The apparatus for manufacturing a secondary battery of claim 12, wherein the vertical adjustment module further comprises a guide pillar part installed to be spaced a predetermined distance from each other at each of both sides of the main pillar part and configured to prevent the support plate from being shaken while moving vertically.

14. The apparatus for manufacturing a secondary battery of claim 1, wherein the venting unit comprises:
a pressure sensor configured to measure a pressure inside the cell;
an electro-pneumatic regulator configured to suction the internal gas from the inside of the cell through the venting module based on the result value sensed by the pressure sensor; and
a buffer tank disposed in the middle of a path along which the internal gas moves from the venting module to the electro-pneumatic regulator and configured to separate and store an electrolyte mixed in the gas inside the cell by using gravity.

15. A method for manufacturing a secondary battery, the method comprising:
a standby process in which a cell is disposed on a cell standby unit;
a first transfer process in which a cell transfer unit picks up the cell from the cell standby unit to transfer the cell to a cell activation unit;
an activation process of charging and discharging the cell to perform an activation process in the cell activation unit;
a venting process in which a venting unit moves to the cell activation unit to discharge an internal gas with respect to the cell provided in the cell activation unit; and
a return process in which the venting unit returns to its original position.

16. The method for manufacturing a secondary battery of claim 15, further comprising a second transfer process in which the cell transfer unit transfers the cell provided in the cell activation unit to the cell standby unit.

17. The method for manufacturing a secondary battery of claim 16, wherein, in the first transfer process or the second transfer process, the cell transfer unit is hung on a guide rail unit extending in a direction, in which a plurality of cell activation units are arranged, to move along the guide rail unit, and
in the venting process or the return process, the venting unit is hung on the guide rail unit to move along the guide rail unit.

18. The method for manufacturing a secondary battery of claim 16, wherein, in the first transfer process, the cell transfer unit is configured to transfer the cell to a jig provided in the cell activation unit, and
in the activation process, the jig is configured to press the cell so that charging/discharging of the cell is performed.

19. The method for manufacturing a secondary battery of claim 18, further comprising, before the second transfer process, a pressing release process of releasing the pressing of the cell, which is pressed by the jig.
